# EUROPEAN PATENT SPECIFICATION

(11) **EP 3 889 097 B1**
(45) Date of publication and mention of the grant of the patent: **04.09.2024**
(21) Application number: 19871067.5
(22) Date of filing: 27.09.2019
(51) Int. Cl.: B66F 3/10, B66F 3/16, B66F 3/20

(54) **TRANSMISSION ASSEMBLY USED FOR LIFTING/LOWERING COLUMN, AND LIFTING/LOWERING COLUMN**
GETRIEBEANORDNUNG ZUM HEBEN/SENKEN EINER SÄULE UND HEBEN/SENKEN EINER SÄULE
ENSEMBLE DE TRANSMISSION UTILISÉ POUR UNE COLONNE DE LEVAGE/D'ABAISSEMENT ET COLONNE DE LEVAGE/D'ABAISSEMENT

(30) Priority: 10.10.2018 CN 201811179382
(43) Date of publication of application: 06.10.2021
(73) Proprietor: Zhejiang Jiecang Linear Motion Technology Co., Ltd, Shaoxing, Zhejiang 312500 (CN)
(72) Inventor: LU, Xiaojian, Shaoxing, Zhejiang 312500 (CN); LI, Weiqiang, Shaoxing, Zhejiang 312500 (CN); LI, Bing, Shaoxing, Zhejiang 312500 (CN)
(74) Representative: karo IP
(86) International application number: PCT/CN2019/108362
(87) International publication number: WO 2020/073820

(56) References cited:
- EP-A1- 2 684 488
- CN-A- 106 641 148
- CN-A- 109 399 502
- CN-U- 201 485 226
- CN-U- 202 122 675
- CN-U- 205 634 741
- DE-A1- 19 608 171
- IT-A1- BS20 110 128
- KR-B1- 100 915 023
- KR-B1- 100 915 023

## Description

### FIELD

Embodiments of the present disclosure relate to the field of lifting columns, and more particularly relate to a lifting column transmission assembly and a lifting column.

### BACKGROUND

In a lifting column of a lift mechanism such as a lift table or a lift chair available in current markets, an actuating device is always disposed at an upper end of a transmission assembly and directly fixed to the bottom surface of a lifted platform to thereby implement coupling between the lifting column and the lifted platform. However, an electric motor in the actuating device easily causes vibration during operating, while the vibration is easily transmitted to the lifted platform, causing the lifted platform to vibrate, which affects use experience.

EP 2 684 488 A1 discloses a linear actuator for height adjustment of a table. The linear actuator comprises a telescopic housing and a spindle system arranged in the telescopic housing, which are driven by a drive arranged in a drive housing. The drive housing is arranged on a telescopic part of the telescopic housing. SUMMARY Embodiments of the present disclosure provide a lifting column transmission assembly that enables a smooth transmission, and a lifting column.

In an aspect of the present disclosure, there is provided a transmission assembly for a lifting column that includes an inner tube, comprising: an exteriorly threaded hollow spindle, a transmission screw disposed in the hollow spindle, a sleeve fitted over the hollow spindle, a guide tube limited in the sleeve, and an actuating device actuating the guide tube to rotate, the guide tube and the hollow spindle being synchronously rotatable and being axially expandable and contractable relative to each other; the transmission screw and the hollow spindle being synchronously rotatable and being axially expandable and contractable relative to each other; wherein the actuating device is disposed in the inner tube and securely mounted to an upper end of the sleeve; and a lower end of the sleeve is securely connected with a first transmission nut that is thread-fitted with the hollow spindle, and the first transmission nut is securely coupled to the inner tube, the upper end of the sleeve being movably disposed.

In an embodiment, a top plate is disposed at an upper end of the inner tube, with a gap provided between the actuating device and the top plate; or, a flexible top plate is provided at the upper end of the inner tube, without a gap provided between the actuating device and the flexible top plate.

In an embodiment, a gap is provided between the actuating device and the inner tube.

In an embodiment, the transmission assembly further comprises a positioning block, a positioning slot is provided on a sidewall of the first transmission nut, and a positioning hole is provided at a lower end of the inner tube; wherein the positioning block sequentially passes through the positioning hole and the positioning slot such that positions of the first transmission nut and the inner tube are fixed in the axial direction.

In an embodiment, the actuating device comprises a motor, a gearbox casing, and a deceleration mechanism disposed in the gearbox casing, wherein the deceleration mechanism comprises a sun gear coupled to an output shaft of the motor, a bevel gear planet carrier transmission-fitted with the sun gear, and a spur gear planet carrier fitted with an output end of the bevel gear planet carrier.

In an embodiment, the upper end of the sleeve and the actuating device are coupled via a bolt; or, the upper end of the sleeve and the actuating device are coupled via a bayonet connection.

In an embodiment, the lower end of the sleeve and the first transmission nut are coupled via a bolt; or, the lower end of the sleeve and the first transmission nut are coupled via a bayonet connection.

In another aspect of the present disclosure, there is further provided a lifting column, comprising: a transmission assembly, and an inner tube and an outer tube which are sequentially fitted from inside to outside, wherein the transmission assembly refers to the transmission assembly for a lifting column recited in any of the technical solutions above.

In an embodiment, a lower end of a hollow spindle is provided with a second transmission nut thread-fitted with the transmission screw, and a locking structure limiting the second transmission nut from rotation is provided outside the second transmission nut, the locking structure being disposed in the outer tube and movably fitted with the outer tube.

In an embodiment, the transmission assembly further comprises an intermediate tube disposed between the inner tube and the outer tube, the lower end of the hollow spindle is provided with a second transmission nut thread-fitted with the transmission screw, a locking structure limiting the second transmission nut from rotation is provided outside the second transmission nut, the locking structure being securely coupled to a lower end of the intermediate tube.

Herein, "the upper end of the sleeve is movably disposed" means that the upper end of the sleeve is unfixed, floating in the inner tube.

With the above technical solutions, the present disclosure offers the following advantages:
1. The actuating device is disposed in the inner tube and securely mounted to the upper end of the sleeve; as such, because the lower end of the sleeve is secured on the first transmission nut while the first transmission nut is secured to the lower end of the inner tube, the vibration generated by the actuating device is first transmitted to the first transmission nut via the sleeve and then transmitted to the lower end of the inner tube, instead of being directly transmitted to the lifted platform on top of the inner tube, rendering a lighter vibration during a lifting process of the lifted platform, smoother transmission of the transmission assembly, and better user experience; meanwhile, as the vibration is directly transmitted to the lower end of the inner tube, the portion upstream of the lower end of the inner tube is substantially not stressed, which significantly reduces the stress against the inner tube and thereby improves service life of the inner tube.
2. By providing a gap provided between the actuating device and the top plate, it is less likely for the actuating device to contact with the top plate during operating, such that the vibration is not transmitted to the lifted platform via the top plate, which further improves shock-absorbing effect and renders smoother transmission of the transmission assembly. Or, by providing a flexible top plate, i.e., the top plate is made of a flexible material, because the flexible top plate may absorb the shock from the actuating device, it is an alternative that no gap is provided between the actuating device and the flexible top plate.
3. By providing a gap provided between the actuating device and the inner tube, it is less likely for the actuating device to contact with the inner wall of the inner tube during operating, such that vibration is not transmitted to the lifted platform via the upper end of the inner tube, which further improves shock-absorbing effect and renders smoother transmission of the transmission assembly.
4. By providing a positioning block that sequentially passes through the positioning hole and the positioning slot, positions of the first transmission nut and the inner tube are easily, conveniently fixed in the axial direction.
5. By providing a bevel gear planet carrier and a spur gear planet carrier that are fitted with each other, power transmission of the actuating device becomes smoother and virtually inaudible, which further improves transmission stability of the transmission assembly.
6. The upper end of the sleeve and the actuating device are coupled via a bolt. The self-lock property of threads renders a simple, reliable coupling between the actuating device and the sleeve. Or, the upper end of the sleeve and the first transmission nut are coupled via a bayonet connection, such that the assembly and disassembly thereof are simple and convenient without leveraging tools.
7. The lower end of the sleeve and the first transmission nut are coupled via a bolt. The self-lock property of threads renders a simple, reliable coupling between the actuating device and the sleeve. Or, the lower end of the sleeve and the first transmission nut are coupled via a bayonet connection, such that the assembly and disassembly thereof are simple and convenient without leveraging tools.
8. Embodiments of the present disclosure further provide a lifting column, comprising a transmission assembly, and an inner tube and an outer tube which are sequentially fitted from inside to outside. Owing to smooth and virtually inaudible operation of the transmission assembly, the lifting process of the lifting column is also stable with less vibration.
9. By providing a locking mechanism that is movably fitted with the outer tube, the locking structure and the outer tube are freely movable in the axial direction, such that the locking structure can ascend and descend inside the outer tube along with the second transmission nut.
10. By providing an intermediate tube, the transmission assembly can expand and contract in three stages, rendering a reduced mounting distance for the lifting column; by securely fixing the locking structure to the lower end of the intermediate tube, axial movement of the second transmission nut can bring the intermediate tube to ascend and descend relative to the outer tube, rendering a smoother transmission.

### BRIEF DESCRIPTION OF THE SEVERAL VIEWS OF THE DRAWINGS

Hereinafter, the present disclosure will be further illustrated with reference to the accompanying drawings:
Fig. 1 shows a structural schematic diagram of a transmission assembly according to a first embodiment of the present disclosure.
Fig. 2 is a sectional view of the transmission assembly in the first embodiment of the present disclosure.
Fig. 3 is an enlarged view of A in Fig. 2.
Fig. 4 is an enlarged view of B in Fig. 2.
Fig. 5 is an exploded view of the transmission assembly in the first embodiment of the present disclosure.
Fig. 6 is an exploded view of the actuating device of the transmission assembly in the first embodiment of the present disclosure.
Fig. 7 is a sectional view of a lifting column in the first embodiment of the present disclosure.
Fig. 8 is a partial sectional view of a lifting column in a second embodiment of the present disclosure.
Fig. 9 is a sectional view of a lifting column in a third embodiment of the present disclosure.

Reference Numerals:
1. transmission screw; 11. second transmission part; 2. hollow spindle; 21. first transmission part; 3. guide tube; 4. sleeve; 5. actuating device; 51. motor; 52. gearbox casing; 521. gearbox outer case; 522. gearbox cap; 53. sun gear; 54. bevel gear planet carrier; 55. spur gear planet carrier; 551. spline bushing; 6. second transmission nut; 61. locking structure; 611. first locking block; 612. second locking block; 7. first transmission nut; 71. positioning slot; 8. inner tube; 81. top plate; 82. positioning block; 9. outer tube; 91. base plate; 10. intermediate tube.

### DETAILED DESCRIPTION

Hereinafter, the present disclosure will be described in further detail through preferred embodiments with reference to the accompanying drawings. It is understood that the oriental or positional relationships indicated by the terms "upper," "lower," "left," "right," "longitudinal," "transverse," "inner," "outer," "vertical," "horizontal," "top" and "bottom," etc. are oriental and positional relationships only based on the drawings, which are intended only for facilitating or simplifying description of the present disclosure, not for indicating or implying that the devices/elements have to possess those specific orientations or have to be configured and operated with those specific orientations; therefore, they should not be understood as limitations to the present disclosure.

### First Embodiment:

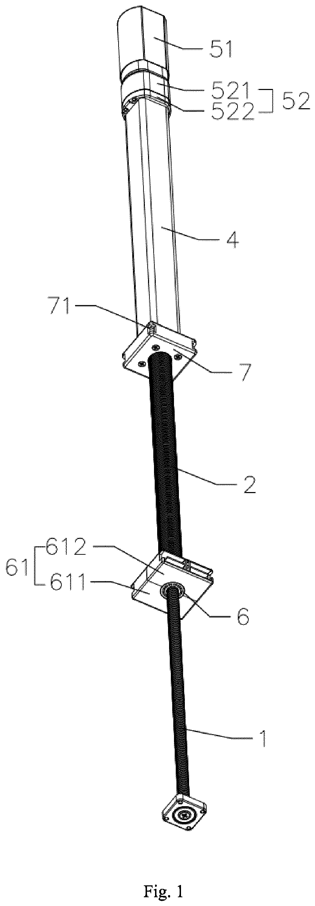

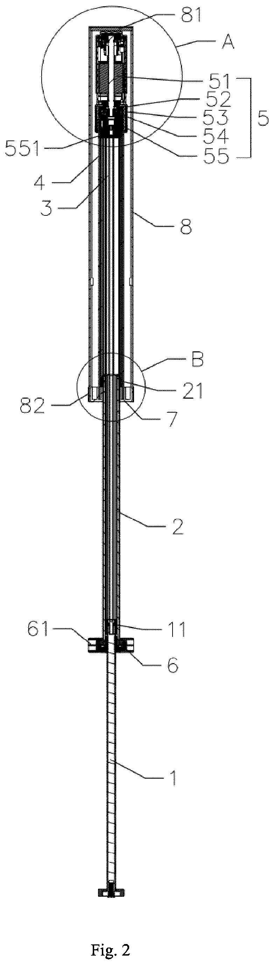

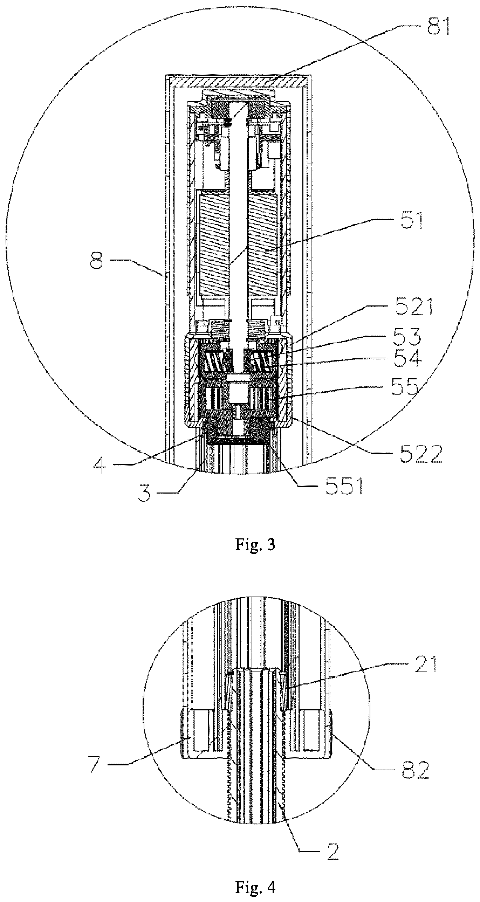

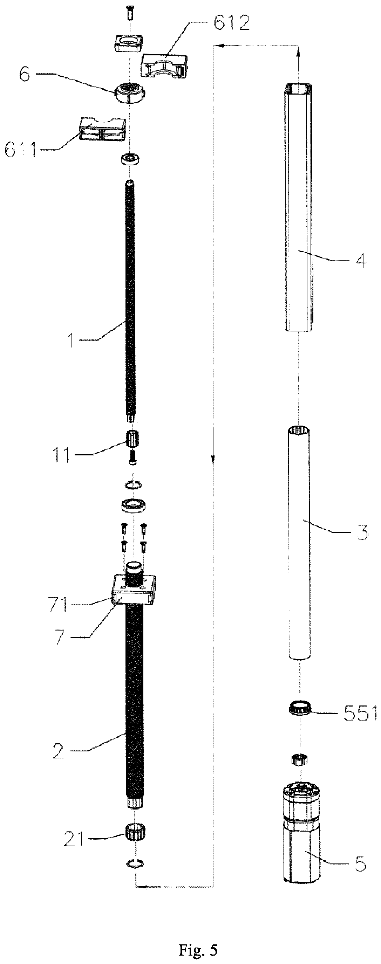

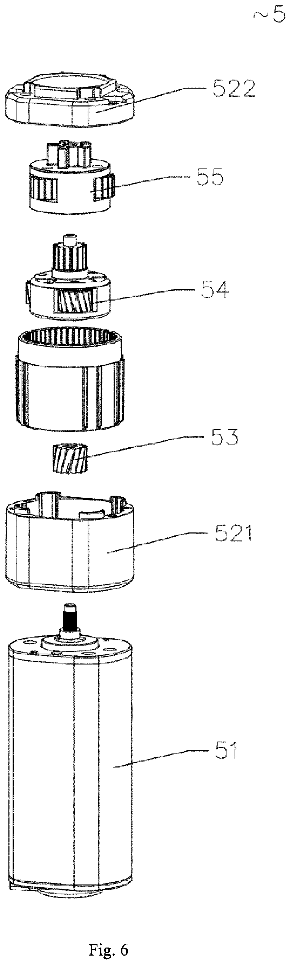

As shown in Figs. 1-6, a transmission assembly for a lifting column is provided, the lifting column includes an inner tube 8, the transmission assembly comprising: an exteriorly threaded hollow spindle 2, a transmission screw 1 disposed in the hollow spindle 2, a sleeve 4 fitted over the hollow spindle 2, a guide tube 3 rotatably limited in the sleeve 4, and an actuating device 5 actuating the guide tube 3 to rotate, wherein the guide tube 3 and the hollow spindle 2 are synchronously rotatable and are axially expandable and contractable relative to each other; the transmission screw 1 and the hollow spindle 2 are synchronously rotatable and are axially expandable and contractable relative to each other; the actuating device 5 is disposed in the inner tube 8 and securely mounted to an upper end of the sleeve 4; and a lower end of the sleeve 4 is securely connected with a first transmission nut 7 that is thread-fitted with the hollow spindle 2, the first transmission nut 7 being securely coupled to the inner tube 8, the upper end of the sleeve 4 being movably disposed, i.e., the upper end of the sleeve 4 is unfixed, but floating in the inner tube. The vibration generated by the actuating device 5 is first transmitted to the first transmission nut 7 via the sleeve 4 and then transmitted to the lower end of the inner tube 8, instead of being directly transmitted to the lifted platform on top of the inner tube 8, rendering a lighter vibration during the lifting process of the lifted platform, smoother transmission of the transmission assembly, and better user experience; furthermore, as the vibration is directly transmitted to the lower end of the inner tube, the portion upstream of the lower end of the inner tube is substantially not stressed, which significantly reduces the inner stress against the inner tube and thereby improves service life of the inner tube.

In this embodiment, a top plate 81 is disposed at the upper end of the inner tube 8, and a gap is present between the actuating device 5 and the inner tube 8 and between the actuating device 5 and the top plate 81, respectively, such that it is less likely for the actuating device 5 to contact with the inner tube 8 and the top plate 81 during operating, and the vibration is not transmitted to the lifted platform via the top plate 81 or the inner tube 8, which further improves shock-absorbing effect.

The actuating device 5 comprises a motor 51, a gearbox casing 52, and a deceleration mechanism in the gearbox casing 52, wherein the deceleration mechanism comprises a sun gear 53 coupled to an output shaft of the motor 5, a bevel gear planet carrier 54 transmission-fitted with the sun gear 53, and a spur gear planet carrier 55 fitted with an output end of the bevel gear planet carrier 54. The gearbox casing 52 includes a gearbox outer case 521 and a gearbox cap 522, wherein the deceleration mechanism is disposed in an inner cavity formed by the gearbox outer case 521 and the gearbox cap 522; by providing the bevel gear planet carrier 54 and the spur gear planet carrier 55 which are fitted, power transmission of the actuating device 5 becomes smoother and virtually inaudible, which further improves shock-absorbing effect of the transmission assembly. The output end of the spur gear planetary carrier 55 is provided with a spline bushing 551, and an inner spline is provided on the guide tube 3, wherein the spline bushing 551 and the inner spline are fit to enable the guide tube 3 and the spur gear planetary carrier 55 to rotate synchronously.

In an embodiment, the guide tube 3 is in transmission connection with the hollow spindle 2 via the first transmission part 21, wherein the first transmission part 21 is securely mounted to the upper end of the hollow spindle 2, the cross-section shape of the first transmission part 21 fits with the cross-section shape of the guide tube 3, such that the first transmission part 21 can only move axially relative to the guide tube 3, but cannot perform a peripheral rotation.

The transmission screw 1 is in transmission connection with the hollow spindle 2 via the second transmission part 11, wherein the second transmission part 11 is securely mounted to the upper end of the transmission screw 1, the cross-section shape of the second transmission part 11 fits with the cross-section shape of the hollow spindle 2, such that the second transmission part 11 can only move axially relative to the hollow spindle 2, but cannot perform a peripheral rotation.

The transmission assembly further comprises a positioning block 82, a positioning slot 71 is provided on a sidewall of the first transmission nut 7, and a positioning hole is provided at a lower end of the inner tube 8, wherein the positioning block 82 sequentially passes through the positioning hole and the positioning slot 71 such that the first transmission nut 7 and the inner tube 8 are easily and conveniently secured at positions in the axial direction.

The upper end of the sleeve 4 and the gearbox cap 522 of the actuating device 5 are coupled via a bolt. The self-lock property of threads renders a simple, reliable coupling between the actuating device 5 and the sleeve 4. In an embodiment, the cross section of the sleeve 4 has a square shape and four bolts are provided on four corners of the sleeve 4, respectively, such that the coupling between the sleeve 4 and the actuating device 5 is more secure and reliable.

The lower end of the sleeve 4 and the first transmission nut 7 are coupled via a bolt, wherein the bolt passes through the first transmission nut 7 to fit with the sleeve 4 so as to securely fix the sleeve 4 to the first transmission nut 7. The self-lock property of threads renders a simple, reliable coupling between the actuating device 5 and the sleeve 4. In an embodiment, four bolts are provided on four corners of the sleeve 4, respectively, such that the coupling between the sleeve 4 and the actuating device 5 is more secure and reliable.

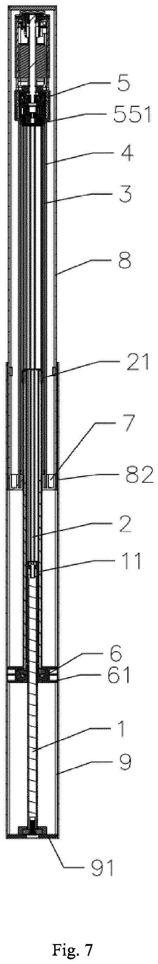

As illustrated in Fig. 7, embodiments of the present disclosure further provide a lifting column, comprising a transmission assembly, and an inner tube 8 and an outer tube 9 which are sequentially fitted from inside to outside, wherein the transmission assembly refers to the transmission assembly for a lifting column recited any of the above technical solutions. Owing to smooth and virtually inaudible operation of the transmission assembly, the lifting process of the lifting column is also stable with less vibration. A lower end of the outer tube 9 is provided with a base plate 91, and a lower end of the transmission screw 1 is fixed on the base plate 91, and the lifting column is fixed on a mounting plane.

A lower end of the hollow spindle 2 is provided with a second transmission nut 6 whose position in fixed in the peripheral direction, the second transmission nut 6 being thread-fitted with the transmission screw 1. The hollow spindle 2 is rotatably positioned in the axial direction with respect to the second transmission nut 6, a locking structure 61 limiting the second transmission nut 6 from rotation is provided outside the second transmission nut 6, the locking structure 61 being disposed in the outer tube 9 and movably fit with the outer tube 9; movable fitting between the locking structure 61 and the outer tube 9 enables the locking structure 61 and the outer tube 9 to move freely in the axial direction, such that the locking structure 61 may ascend and descend in the inner tube 9 along with the second transmission nut 6.

In an embodiment, the locking structure 61 comprises a first locking block 611 and a second locking block 612, wherein the first locking block 611 and the second locking block 612, after being folded, form an accommodation slot, wherein the second transmission nut 6 is disposed in the accommodation slot; a limiting hole is provided in the accommodation slot, and a limiting protrusion is provided on the second transmission nut 6, wherein fitting between the limiting hole and the limiting protrusion causes the locking structure 61 to be fixed at a peripheral position opposite to the second transmission nut 6, which limits rotation of the second transmission nut 6; meanwhile, the cross-section shape of the locking structure 61 fits with the cross-section shape of the outer case, such that the locking structure 61 can only move axially in the outer case, but cannot rotate peripherally.

An operating process of the lifting column in this embodiment is described as such: the motor 51 in the actuating device 5 actuates the sun gear 53 to rotate, the sun gear 53 brings the bevel gear planetary carrier 54 to rotate, the bevel gear planetary carrier moves the spur gear planetary carrier 55 to rotate, the spur gear planetary carrier 55 brings the spline bushing 551 to rotate, the spline bushing 551 moves the guide tube 3 to rotate, the guide tube 3 brings the hollow spindle 2 via the first transmission part 21 to rotate synchronously, and the hollow spindle 2 moves the transmission screw 1 via the second transmission part 11 to rotate; as the transmission screw 1 and the base plate 91 are axially limited, the second transmission nut 6 ascends and descends along the transmission screw 1, the hollow spindle 2, while rotating, ascends and descends along with the second transmission nut 6, the first transmission nut 7 ascends and descends axially along the hollow spindle 2, and the first transmission nut 7 brings the inner tube 8 to ascend and descend, thereby realizing lifting of the lifting column.

It is understood that in an alternative embodiment, no gap is provided between the actuating device and the inner tube.

It is understood that in an alternative embodiment, the upper end of the sleeve and the gearbox cap are coupled via a bayonet connection.

It is understood that in an alternative embodiment, the lower end of the sleeve and the first transmission nut are coupled via a bayonet connection.

It is understood that in an alternative embodiment, a limiting protrusion is provided in the accommodation slot, and a limiting hole is provided on the second transmission nut.

### Second Embodiment

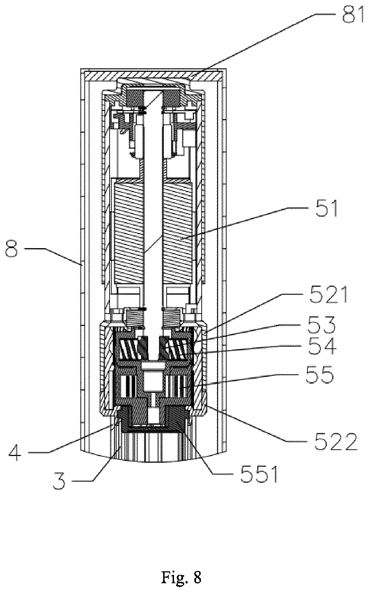

As shown in Fig. 8, the second embodiment differs from the first embodiment mainly in that the top plate 81 is a flexible top plate made of a flexible material; in this case, no gap is provided between the actuating device and the flexible top plate, because the flexible top plate may buffer vibration from actuating device.

### Third Embodiment

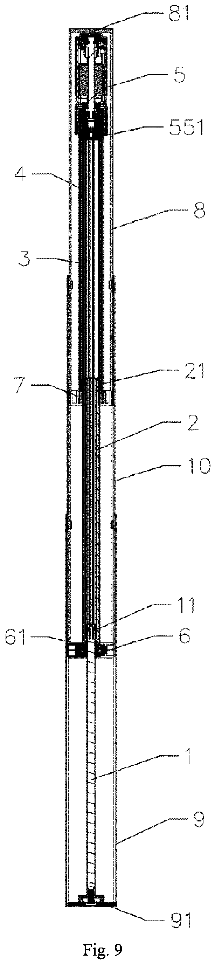

As shown in Fig. 9, the third embodiment differs from the first embodiment mainly in that the transmission assembly further comprises an intermediate tube 10 disposed between the inner tube 8 and the outer tube 9. This setting offers a beneficial effect that the three-stage tube setting enables synchronous expansion and contraction, rendering a reduced distance for the lifting column.

In this embodiment, the lower end of the hollow spindle 2 is provided with a second transmission nut 6 whose peripheral position is fixed, the second transmission nut 6 being thread-fitted with the transmission screw 1; the hollow spindle 2 is rotatably positioned in the axial direction with respect to the second transmission nut 6, a locking structure 61 limiting the second transmission nut 6 from rotation is provided outside the second transmission nut 6, and the locking structure 61 is securely coupled to the lower end of the intermediate tube 10, such that axial movement of the second transmission nut 6 can bring the intermediate tube 10 to ascend and descend relative to the outer tube, rendering a smoother transmission.

An operating process of the lifting column in this embodiment is described as such: the motor in the actuating device 5 actuates the sun gear to rotate, the sun gear brings the bevel gear planetary carrier to rotate, the bevel gear planetary carrier moves the spur gear planetary carrier to rotate, the spur gear planetary carrier brings the spline bushing 551 to rotate, the spline bushing 551 moves the guide tube 3 to rotate, the guide tube 3 brings the hollow spindle 2 to rotate synchronously via the first transmission part 21, and the hollow spindle 2 moves the transmission screw 1 to rotate via the second transmission part 11; as the transmission screw 1 and the base plate 91 are axially limited, the second transmission nut 6 ascends and descends axially along the transmission screw 1, the second transmission nut 6 brings the intermediate tube 10 to ascend and descend via the locking structure 61, the hollow spindle 2ascends and descends along with the second transmission nut 6 while rotating, the first transmission nut 7 ascends and descends axially along the hollow spindle 2, and the first transmission nut 7 brings the inner tube 8 to ascend and descend, thereby realizing lifting of the lifting column.

In addition to the preferred embodiments above, the present disclosure also has other embodiments. Those skilled in the art may make various variations and alternations based on the present disclosure, and such variations and alterations should fall within the scope defined by the appended claims.

## Claims

1. Transmission assembly for a lifting column that includes an inner tube (8), comprising: an exteriorly threaded hollow spindle (2), a transmission screw (1) disposed in the hollow spindle (2), a sleeve (4) fitted over the hollow spindle (2), a guide tube (3) limited in the sleeve (4), and an actuating device(5) actuating the guide tube (3) to rotate, the guide tube (3) and the hollow spindle (2) being synchronously rotatable and axially expandable and contractable relative to each other, the transmission screw (1) and the hollow spindle (2) being synchronously rotatable and axially expandable and contractable relative to each other; wherein the actuating device (5) is disposed in the inner tube (8) and a lower end of the sleeve (4) is securely connected with a first transmission nut (7), **characterized in that**:
the actuating device (5) is securely mounted to an upper end of the sleeve (4); and the first transmission nut (7) is thread-fitted with the hollow spindle (2) and securely coupled to the inner tube (8), and the upper end of the sleeve (4) is movably disposed.

2. Transmission assembly according to claim 1, wherein a top plate (81) is disposed at an upper end of the inner tube (8), with a gap provided between the actuating device (5) and the top plate (81); or, a flexible top plate (81) is provided at the upper end of the inner tube (8), without a gap provided between the actuating device (5) and the flexible top plate (81).

3. Transmission assembly according to claim 1, wherein a gap is provided between the actuating device (5) and the inner tube (8).

4. Transmission assembly according to claim 1, wherein the transmission assembly further comprises a positioning block (82), a positioning slot (71) is provided on a sidewall of the first transmission nut (7), and a positioning hole is provided at a lower end of the inner tube (8); wherein the positioning block (82) sequentially passes through the positioning hole and the positioning slot (71) such that positions of the first transmission nut (7) and the inner tube (8) are fixed in the axial direction.

5. Transmission assembly according to claim 1, wherein the actuating device (5) comprises a motor (51), a gearbox casing (52), and a deceleration mechanism disposed in the gearbox casing (52), wherein the deceleration mechanism comprises a sun gear (53) coupled to an output shaft of the motor (51), a bevel gear planet carrier (54) transmission-fitted with the sun gear (53), and a spur gear planet carrier (55) fitted with an output end of the bevel gear planet carrier (54).

6. Transmission assembly according to claim 1, wherein the upper end of the sleeve (4) and the actuating device (5) are coupled via a bolt; or, the upper end of the sleeve (4) and the actuating device (6) are coupled via a bayonet connection.

7. Transmission assembly according to claim 1, wherein the lower end of the sleeve (4) and the first transmission nut (7) are coupled via a bolt; or, the lower end of the sleeve (4) and the first transmission nut (7) are coupled via a bayonet connection.

8. Lifting column, comprising: a transmission assembly, and an inner tube (8) and an outer tube (9) which are sequentially fitted from inside to outside, wherein the transmission assembly is the transmission assembly for a lifting column according to any one of claims 1-7.

9. Lifting column according to claim 8, wherein a lower end of a hollow spindle (2) is provided with a second transmission nut (6) thread-fitted with the transmission screw (1), and a locking structure (61) limiting the second transmission nut (6) from rotation is provided outside the second transmission nut (6), the locking structure (61) being disposed in the outer tube (9) and movably fitted with the outer tube (9).

10. Lifting column according to claim 8, wherein the transmission assembly further comprises an intermediate tube (10) disposed between the inner tube (8) and the outer tube (9), the lower end of the hollow spindle (2) is provided with a second transmission nut (6) thread-fitted with the transmission screw (1), and a locking structure (61) limiting the second transmission nut (6) from rotation is provided outside the second transmission nut (6), the locking structure (61) being securely coupled to a lower end of the intermediate tube (10).

## Patentansprüche

1. Getriebebaugruppe für eine Hubsäule mit einem Innenrohr (8), die umfasst: eine Hohlspindel (2) mit Außengewinde, eine in der Hohlspindel (2) angeordnete Getriebeschraube (1), eine über die Hohlspindel (2) gestülpte Hülse (4), ein in der Hülse (4) begrenztes Führungsrohr (3) und eine Betätigungsvorrichtung (5), die das Führungsrohr (3) in Drehung versetzt, wobei das Führungsrohr (3) und die Hohlspindel (2) synchron drehbar und relativ zueinander axial ausdehnbar und zusammenziehbar sind, und wobei die Getriebeschraube (1) und die Hohlspindel (2) synchron drehbar und relativ zueinander axial ausdehnbar und zusammenziehbar sind; wobei die Betätigungsvorrichtung (5) in dem Innenrohr (8) angeordnet ist und ein unteres Ende der Hülse (4) mit einer ersten Getriebemutter (7) fest verbunden ist, **dadurch gekennzeichnet, dass**:
die Betätigungsvorrichtung (5) an einem oberen Ende der Hülse (4) fest angebracht ist; und die erste Getriebemutter (7) mit der Hohlspindel (2) schraubig verbunden und mit dem Innenrohr (8) fest verbunden ist, und das obere Ende der Hülse (4) beweglich angeordnet ist.

2. Getriebebaugruppe nach Anspruch 1, wobei eine Deckplatte (81) an einem oberen Ende des Innenrohrs (8) angeordnet ist, wobei ein Spalt zwischen der Betätigungsvorrichtung (5) und der Deckplatte (81) vorgesehen ist; oder eine flexible Deckplatte (81) an dem oberen Ende des Innenrohrs (8) vorgesehen ist, ohne dass ein Spalt zwischen der Betätigungsvorrichtung (5) und der flexiblen Deckplatte (81) vorgesehen ist.

3. Getriebebaugruppe nach Anspruch 1, wobei zwischen der Betätigungsvorrichtung (5) und dem Innenrohr (8) ein Spalt vorgesehen ist.

4. Getriebebaugruppe nach Anspruch 1, wobei die Getriebebaugruppe ferner einen Positionierungsblock (82) umfasst, ein Positionierungsschlitz (71) an einer Seitenwand der ersten Getriebemutter (7) vorgesehen ist und ein Positionierungsloch an einem unteren Ende des Innenrohrs (8) vorgesehen ist; wobei der Positionierungsblock (82) nacheinander durch das Positionierungsloch und den Positionierungsschlitz (71) verläuft, so dass die Positionen der ersten Getriebemutter (7) und des Innenrohrs (8) in axialer Richtung fixiert sind.

5. Getriebebaugruppe nach Anspruch 1, wobei die Betätigungsvorrichtung (5) einen Motor (51), ein Getriebegehäuse (52) und einen in dem Getriebegehäuse (52) angeordneten Verzögerungsmechanismus umfasst, wobei der Verzögerungsmechanismus ein mit einer Ausgangswelle des Motors (51) gekoppeltes Sonnenrad (53), einen mit dem Sonnenrad (53) übertragungsmäßig verbundenen Kegelrad-Planetenträger (54) und einen mit einem Ausgangsende des Kegelrad-Planetenträgers (54) verbundenen Stirnrad-Planetenträger (55) umfasst.

6. Getriebebaugruppe nach Anspruch 1, wobei das obere Ende der Hülse (4) und die Betätigungsvorrichtung (5) über eine Schraube gekoppelt sind; oder das obere Ende der Hülse (4) und die Betätigungsvorrichtung (6) über eine Bajonettverbindung gekoppelt sind.

7. Getriebebaugruppe nach Anspruch 1, wobei das untere Ende der Hülse (4) und die erste Getriebemutter (7) über eine Schraube gekoppelt sind; oder das untere Ende der Hülse (4) und die erste Getriebemutter (7) über eine Bajonettverbindung gekoppelt sind.

8. Hubsäule, umfassend: eine Getriebebaugruppe und ein Innenrohr (8) und ein Außenrohr (9), die nacheinander von innen nach außen angebracht sind, wobei die Getriebebaugruppe die Getriebebaugruppe für eine Hubsäule nach einem der Ansprüche 1-7 ist.

9. Hubsäule nach Anspruch 8, wobei ein unteres Ende einer Hohlspindel (2) mit einer zweiten Getriebemutter (6) versehen ist, die mit der Getriebeschraube (1) schraubig verbunden ist, und eine Verriegelungsstruktur (61), die die Drehung der zweiten Getriebemutter (6) beschränkt, außerhalb der zweiten Getriebemutter (6) vorgesehen ist, wobei die Verriegelungsstruktur (61) in dem Außenrohr (9) angeordnet und beweglich mit dem Außenrohr (9) verbunden ist.

10. Hubsäule nach Anspruch 8, wobei die Getriebebaugruppe ferner ein Zwischenrohr (10) umfasst, das zwischen dem Innenrohr (8) und dem Außenrohr (9) angeordnet ist, und wobei das untere Ende der Hohlspindel (2) mit einer zweiten Getriebemutter (6) versehen ist, die mit der Getriebeschraube (1) schraubig verbunden ist, und eine Verriegelungsstruktur (61), die die Drehung der zweiten Getriebemutter (6) beschränkt, außerhalb der zweiten Getriebemutter (6) vorgesehen ist, wobei die Verriegelungsstruktur (61) fest mit einem unteren Ende des Zwischenrohrs (10) verbunden ist.

## Revendications

1. Ensemble de transmission pour une colonne de levage qui comprend un tube interne (8), comprenant : une broche creuse filetée extérieurement (2), une vis de transmission (1) disposée dans la broche creuse (2), un manchon (4) ajusté sur la broche creuse (2), un tube de guidage (3) limité dans le manchon (4), et un dispositif d'actionnement (5) actionnant le tube de guidage (3) pour qu'il tourne, le tube de guidage (3) et la broche creuse (2) étant rotatifs de manière synchrone et extensibles et contractables axialement l'un par rapport à l'autre, la vis de transmission (1) et la broche creuse (2) étant rotatives de manière synchrone et extensibles et contractables axialement l'une par rapport à l'autre ; dans lequel le dispositif d'actionnement (5) est disposé dans le tube interne (8) et une extrémité inférieure du manchon (4) est fermement raccordée à un premier écrou de transmission (7), **caractérisé en ce que** :
le dispositif d'actionnement (5) est fermement monté sur une extrémité supérieure du manchon (4) ; et le premier écrou de transmission (7) est ajusté en filetage avec la broche creuse (2) et fermement couplé au tube interne (8), et l'extrémité supérieure du manchon (4) est disposée de manière mobile.

2. Ensemble de transmission selon la revendication 1, dans lequel une plaque supérieure (81) est disposée à une extrémité supérieure du tube interne (8), avec un espace prévu entre le dispositif d'actionnement (5) et la plaque supérieure (81); ou, une plaque supérieure flexible (81) est prévue à l'extrémité supérieure du tube interne (8), sans espace prévu entre le dispositif d'actionnement (5) et la plaque supérieure flexible (81).

3. Ensemble de transmission selon la revendication 1, dans lequel un espace est prévu entre le dispositif d'actionnement (5) et le tube interne (8).

4. Ensemble de transmission selon la revendication 1, dans lequel l'ensemble de transmission comprend en outre un bloc de positionnement (82), une fente de positionnement (71) est prévue sur une paroi latérale du premier écrou de transmission (7), et un trou de positionnement est prévu à une extrémité inférieure du tube interne (8) ; dans lequel le bloc de positionnement (82) passe séquentiellement à travers le trou de positionnement et la fente de positionnement (71) de sorte que les positions du premier écrou de transmission (7) et du tube interne (8) soient fixées dans la direction axiale.

5. Ensemble de transmission selon la revendication 1, dans lequel le dispositif d'actionnement (5) comprend un moteur (51), un carter de boîte de vitesses (52) et un mécanisme de décélération disposé dans le carter de boîte de vitesses (52), dans lequel le mécanisme de décélération comprend un pignon solaire (53) couplé à un arbre de sortie du moteur (51), un porte-satellites à pignon conique (54) ajusté en transmission avec le pignon solaire (53), et un porte-satellites à pignon cylindrique (55) ajusté avec une extrémité de sortie du porte-satellites à pignon conique (54).

6. Ensemble de transmission selon la revendication 1, dans lequel l'extrémité supérieure du manchon (4) et le dispositif d'actionnement (5) sont couplés via un boulon ; ou, l'extrémité supérieure du manchon (4) et le dispositif d'actionnement (6) sont couplés via une connexion à baïonnette.

7. Ensemble de transmission selon la revendication 1, dans lequel l'extrémité inférieure du manchon (4) et le premier écrou de transmission (7) sont couplés via un boulon ; ou, l'extrémité inférieure du manchon (4) et le premier écrou de transmission (7) sont couplés via une connexion à baïonnette.

8. Colonne de levage, comprenant : un ensemble de transmission, et un tube interne (8) et un tube externe (9) qui sont ajustés séquentiellement de l'intérieur vers l'extérieur, dans laquelle l'ensemble de transmission est l'ensemble de transmission pour une colonne de levage selon l'une quelconque des revendications 1 à 7.

9. Colonne de levage selon la revendication 8, dans laquelle une extrémité inférieure d'une broche creuse (2) est pourvue d'un second écrou de transmission (6) ajusté en filetage avec la vis de transmission (1), et une structure de verrouillage (61) limitant la rotation du second écrou de transmission (6) est prévue à l'extérieur du second écrou de transmission (6), la structure de verrouillage (61) étant disposée dans le tube externe (9) et ajusté de manière mobile avec le tube externe (9).

10. Colonne de levage selon la revendication 8, dans laquelle l'ensemble de transmission comprend en outre un tube intermédiaire (10) disposé entre le tube interne (8) et le tube externe (9), l'extrémité inférieure de la broche creuse (2) est pourvue d'un second écrou de transmission (6) ajusté en filetage avec la vis de transmission (1), et une structure de verrouillage (61) limitant la rotation du second écrou de transmission (6) est prévue à l'extérieur du second écrou de transmission (6), la structure de verrouillage (61) étant fermement couplée à une extrémité intérieure du tube intermédiaire (10).
